# EUROPÄISCHE PATENTSCHRIFT

(11) **EP 3 942 975 B1**
(45) Veröffentlichungstag und Bekanntmachung des Hinweises auf die Patenterteilung: **24.12.2025**
(21) Anmeldenummer: 21186544.9
(22) Anmeldetag: 20.07.2021
(51) Int. Cl.: A47J 29/02, A47J 27/21, A47J 29/00, A47J 27/04

(54) **VORRICHTUNG ZUM ZUBEREITEN VON SPIEGELEIERN**
DEVICE FOR PREPARING FRIED EGGS
DISPOSITIF PERMETTANT DE PRÉPARER DES OEUFS AU PLAT

(30) Priorität: 21.07.2020 DE 202020104188 U; 18.02.2021 DE 102021103801
(43) Veröffentlichungstag der Anmeldung: 26.01.2022
(73) Patentinhaber: Asendorf, Ilona, 27243 Beckeln (DE)
(72) Erfinder: Asendorf, Ilona, 27243 Beckeln (DE); Asendorf, Annika, 27243 Beckeln (DE); Asendorf, Nico, 27243 Beckeln (DE); Asendorf, Timo, 27243 Beckeln (DE)
(74) Vertreter: Jabbusch, Matthias

(56) Entgegenhaltungen:
- CH-A- 289 645
- DE-A1- 102006 058 099
- US-A- 3 596 590
- US-A1- 2014 272 037
- US-A1- 2021 127 900

## Beschreibung

Die Erfindung betrifft eine Vorrichtung zum Zubereiten von Spiegeleiern, aufweisend eine Wärmeerzeugungseinrichtung und wenigstens einen Zubereitungsbereich, der zumindest abschnittsweise von der Wärmeerzeugungseinrichtung und einer Haube begrenzt ist, wobei der Zubereitungsbereich wenigstens eine Garfläche aufweist, auf der wenigstens ein zuzubereitendes Spiegelei anordbar ist, und wobei die Haube wenigstens einen Trenneinsatz aufweist, durch den ein Teilbereich des Zubereitungsbereichs von dem restlichen Zubereitungsbereich abgetrennt ist.

Für Spiegeleier gibt es anders als für gekochte Eier kaum eine Vorrichtung zum Zubereiten speziell dieser, welche durch entsprechende Einstellungen an der Vorrichtung ein optimales Garergebnis sicherstellt. Aus der DE 10 2006 058 099 A1 oder der CH 289645 sind zwar Vorrichtungen bekannt, bei denen Spiegeleier verschiedenen Mulden zugeordnet werden können, so dass diese nicht ineinander fließen, jedoch kann kaum ein weiterer Einfluss auf das Garergebnis genommen werden.

Spiegeleier werden daher zumeist in einem Ofen oder in einer Pfanne gegart, wobei die besondere Herausforderung darin besteht, dass zwar das Eiweiß des Spiegeleis gerinnt, das Eigelb des Spiegeleis aber noch glänzend ist. In Abhängigkeit von der Zubereitungsart bildet sich, wenn die Spiegeleier in einem Ofen oder in einer Pfanne mit aufgelegtem Deckel gegart werden, ein weißlicher Schleier auf dem Eigelb bzw. Dotter, wodurch das Spiegelei ein weniger ansehnliches Äußeres aufweist.

Eine Vorrichtung die Eigelb und Eiweiß zumindest gezielt voneinander trennt, geht aus der US 2014/0272037 A1. Dadurch sind dann die jeweilige Geometrie des Eigelbs und des Eiweißes während der Zubereitung genau definiert, so dass zugeführte Temperatur gezielter gesteuert werden soll. Eine das Optische des Eigelbs betreffende Verbesserung lässt sich mit der US 2014/0272037 A1 jedoch nicht erzielen.

Die US 3,596,590 A offenbart einen Zubereitungsbereich, dem ein Reservoir für eine dem Zubereitungsbereich zuzuführende Flüssigkeit zugeordnet ist. Um zu verhindern, dass Flüssigkeit unmittelbar auf ein zu garendes Produkt, beispielsweise ein Spiegelei, trifft, ist einem Zulauf dieses Reservoirs ein Ablenkungsblech zugeordnet, welches die Flüssigkeit entsprechend ablenkt bzw. verteilt. Die aufgeworfene Problematik der Erscheinung des Eigelbs wird damit jedoch ebenso wenig abgeholfen wie das ein optimiertes Garergebnis erzielt werden könnte.

Aufgabe der Erfindung ist es jetzt eine Vorrichtung bereitzustellen, die gleich einem Eierkocher für gekochte Eier eine verbesserte Wärmeführung und dadurch ein optimales Garergebnis liefert und sicherstellt, dass das Eigelb während der Zubereitung seine Farbe und sein Glanz behält.

Die Lösung dieser Aufgabe erfolgt mit den Merkmalen des Anspruchs 1. Weiterbildungen und vorteilhafte Ausgestaltungen sind in den jeweils nachgeordneten Ansprüchen angegeben.

Die Vorrichtung zum Zubereiten von Spiegeleiern, aufweisend eine Wärmeerzeugungseinrichtung und wenigstens einen Zubereitungsbereich, der zumindest abschnittsweise von der Wärmeerzeugungseinrichtung und einer Haube begrenzt ist, wobei der Zubereitungsbereich wenigstens eine Garfläche aufweist, auf der wenigstens ein zuzubereitendes Spiegelei anordbar ist, und wobei die Haube wenigstens einen Trenneinsatz aufweist, durch den ein Teilbereich des Zubereitungsbereichs von dem restlichen Zubereitungsbereich abgetrennt ist zeichnet sich erfindungsgemäß dadurch aus, dass der Trenneinsatz einen bei bestimmungsgemäßer Verwendung nach oben hin offenen Abzug ausbildet.

Die Kombination aus Garfläche und Trenneinsatz ermöglicht, dass das Eigelb bzw. der Dotter eines zu garenden Spiegeleis von dem restlichen Spiegelei, insbesondere dessen Eiweiß, entkoppelt ist, so dass sich unter der Haube sammelnder Wasserdampf nicht auf das Eigelb schlägt. Das Eigelb bzw. der Dotter des zu garenden Spiegeleis ist daher so auf der Garfläche zu positionieren, dass dieses während der Zubereitung in der Vorrichtung unterhalb des Trenneinsatzes der Haube angeordnet ist. Der von der Wärmeerzeugungseinrichtung und der Haube begrenzte Zubereitungsbereich ist demnach in wenigstens zwei Teilbereiche unterteilt, wobei die Wärmeerzeugungseinrichtung durch Wärmeabgabe an die Garfläche das gesamte Spiegelei von unten erhitzt, jedoch durch die Wärmeerzeugungseinrichtung erzeugter heißer Wasserdampf nicht auf den durch den Trenneinsatz abgetrennten Teilbereich wirken kann. In dem nicht von dem Trenneinsatz abgetrennten Teilbereich ist das Spiegelei dadurch einer höheren Garintensität ausgesetzt. Die höhere Garintensität außerhalb des Teilbereichs in Kombinationen mit nur mittelbar auf das Eigelb wirkender Wärmeerzeugungseinrichtung stellt dabei ein ansehnliches Äußeres des Spiegeleis ohne weißlichen Schleier des Eigelbs sicher.

Um sicherzustellen, dass das Eigelb eines zu garenden Spiegeleis unterhalb des Trenneinsatzes innerhalb des von dem Trenneinsatz abgetrennten Teilbereichs des Zubereitungsbereichs angeordnet ist, kann die Garfläche nach einer Weiterbildung wenigstens eine Mulde aufweisen. Ein auf der Garfläche aufgeschlagenes Ei verteilt sich dann so auf der Garfläche, dass das Eigelb in der Mulde zu liegen kommt. Sollen mit der Vorrichtung mehrere Eier zeitgleich, parallel zubereitet werden, sind entsprechend mehrere Mulden, insbesondere für jedes Ei beziehungsweise Eigelb eine Mulde, vorzusehen.

In weiterer Ausgestaltung ist die Mulde daher an die Größe eines aufgeschlagenen Eigelbs angepasst, insbesondere sind alle Mulden an die Größe jeweils eines Eigelbs angepasst.

In einer alternativen Ausgestaltung ist die Mulde an die Größe eines Spiegeleis insgesamt angepasst, wobei die Mulde insgesamt trichterförmig ist. Auch mit einer solchen Ausgestaltung positioniert sich das Eigelb automatisch in der Mitte der Mulde. Zudem wird dadurch auch die gesamte Form des Spiegeleis vorgegeben.

Nach einer nächsten Weiterbildung ist die Mulde in der Garfläche fluchtend zu dem Teilbereich, der mit dem Trenneinsatz vom restlichen Zubereitungsbereich abgetrennt ist, angeordnet. Ein in der Mulde platziertes Eigelb ist dann dementsprechend vom restlichen Zubereitungsbereich gegenüber heißer Luft und Wasserdampf abgeschirmt. Die Mulde und der Trenneinsatz können dann vorteilhafterweise einen gleichen Durchmesser aufweisen, so dass die gesamte Mulde dem mit dem Trenneinsatz abgetrennten Teilbereich des Zubereitungsbereichs zugeordnet ist.

Der Trenneinsatz für sich kann nach einer Weiterbildung durch ein rohrförmiges Teil gebildet sein, das eine Längsachse aufweist, die zumindest mit einem der Garfläche zugewandten Endabschnitt senkrecht zu der Garfläche ausgerichtet ist. Dieser Endabschnitt des Trenneinsatzes ist dann in geringem Abstand zu der Garfläche angeordnet und zu der Garfläche hin offen. Insbesondere ist der Endabschnitt auf einen Abstand an die Garfläche herangeführt, der geringfügig kleiner ist als die Dicke des Eiweiß eines Spiegeleis, so dass der Endabschnitt in das Eiweiß eintaucht.

Der Trenneinsatz bildet dabei einen bei bestimmungsgemäßer Verwendung nach oben hin offenen Abzug aus. Durch die Öffnung des Abzugs nach außen ist gegenüber einem geschlossenen Trenneinsatz eine nochmals verbesserte Wärmeführung gegeben. Diese führt in Folge zu einem nochmals optimierten Zubereitungsergebnis.

Eine vorteilhafte Konstruktion ergibt sich, wenn Haube und Trenneinsatz einteilig ausgebildet sind, so dass mit dem Aufsetzen der Haube auf die Vorrichtung gleichzeitig immer auch der Trenneinsatz korrekt positioniert ist. Eine Haube kann dabei auch mehrere Trenneinsätze aufweisen oder ein Trenneinsatz mehreren Mulden zugeordnet sein. Trenneinsatz und Haube können vorteilhafterweise durch ein Kunststoffformteil gebildet sein, insbesondere durch ein durchsichtiges Kunststoffformteil gebildet sein.

Eine hinsichtlich des Ergebnisses optimierte Zubereitung der Spiegeleier wird zudem dadurch erreicht, dass der von dem Trenneinsatz abgetrennte Teilbereich einem Mittenabschnitt der Garfläche zugeordnet ist. Hierdurch ergibt sich eine zu dem zu zubereitenden Spiegelei gleichmäßige Wärmeverteilung innerhalb des Zubereitungsbereichs. Indem die Garfläche eine Antihaftbeschichtung aufweist, ist darüber hinausgegeben, dass das Spiegelei während der Zubereitung nicht mit dieser verklebt und somit auf einfache Weise serviert werden kann.

Die Wärmeerzeugungseinrichtung ist nach einer Weiterbildung dazu geeignet und ausgelegt in dem Zubereitungsbereich Wasserdampf zu erzeugen. Die Wärmeerzeugungseinrichtung entspricht damit weitestgehend einem Wassererhitzer eines gewöhnlichen Eierkochers. Der von der Wärmeerzeugungseinrichtung erzeugte Wasserdampf erwärmt dann unmittelbar einerseits die Garfläche und andererseits direkt den nicht mit dem Trenneinsatz abgetrennten Teil eines zuzubereitenden Spiegeleis, insbesondere dessen Eiweiß. Der von dem restlichen Zubereitungsbereich abgetrennte Teilbereich mit dem Eigelb wird nur über die Garfläche erwärmt. Das Spiegelei wird also einerseits auf der Garfläche normal zubereitet. Zudem wird unter der Haube Hitze gestaut und durch die Wärmeerzeugungseinrichtung erzeugter Wasserdampf in diesen Bereich eingeleitet, so dass das Spiegelei auch von oben dampfgegart wird. Durch den Trenneinsatz wird der Teilbereich mit dem Eigelb abgetrennt, so dass sich auf diesem kein weißlicher Schleicher bildet, sondern das Eigelb nur von unten über die Garfläche erhitzt wird. Auf diese Weise wird also insgesamt ein Spiegelei mit einem festen durchgegarten Eiweiß und einem dagegen noch vergleichsweise flüssigem bis festem Eigelb ohne einen Überzug erzeugt.

Ein Ausführungsbeispiel Erfindung, aus dem sich weitere erfindungswesentliche Merkmale ergeben, ist in der Zeichnung dargestellt. Gleiche Teile sind dabei in allen Figuren mit gleichen Bezugszeichen versehen. Es zeigen:
- Figur 1:: Eine Draufsicht auf eine in seine Einzelteile zerlegte erfindungsgemäße Vorrichtung; und
- Figur 2:: Ein Querschnitt durch die zusammengesetzte Vorrichtung gemäß Figur 1;

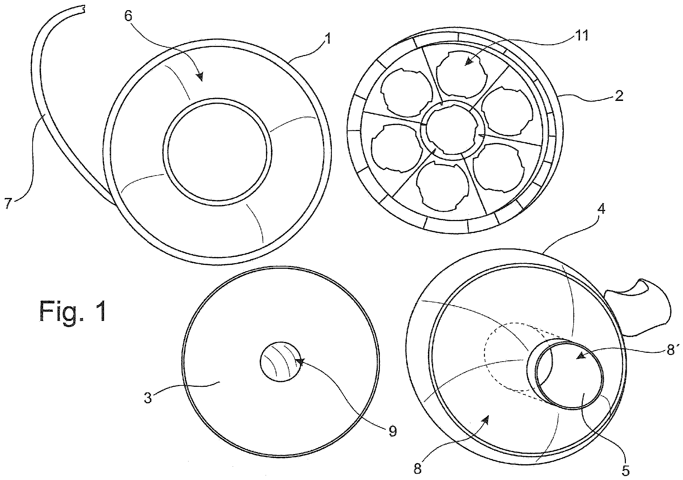

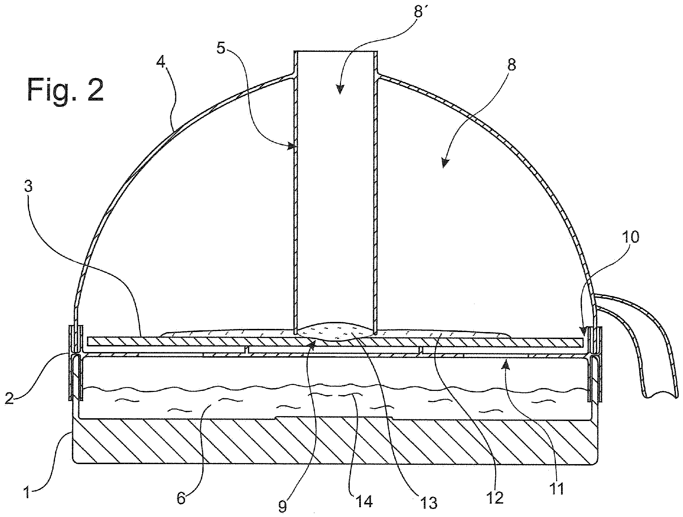

Aus Figur 1 ist eine erfindungsgemäße Vorrichtung bestehend aus einer Wärmeerzeugungseinrichtung 1, einem Garflächenträger 2, einer Garfläche 3 sowie einer Haube 4 mit Trenneinsatz 5 ersichtlich. Die Wärmeerzeugungseinrichtung 1 weist in weiterer Ausgestaltung einen Wasserbehälter 6 und einen Stecker 7 zur Stromversorgung der Wärmeerzeugungseinrichtung 1 auf. Der Rand des Wasserbehälters 6 ist passgenau zu dem Garflächenträger 2 und der Haube 4 ausgebildet, welche zum Zubereiten eines Spiegeleis 12 aufeinander aufbauend zusammengesetzt werden. Die Haube 4 und der Wasserbehälter 6 der Wärmeerzeugungseinrichtung 1 begrenzen dann einen Zubereitungsbereich 8 der Vorrichtung, wie aus Figur 2 ersichtlich.

Die Garfläche 3 ist mit einer Antihaftbeschichtung versehen und weist eine mittige Mulde 9 auf, die geeignet ist ein Eigelb 13 aufzunehmen. Die Garfläche 3 weist weiter einen geringeren Umfang als der auf den Rand des Wasserbehälters 6 aufsetzende Garflächenträger 2 auf. Bei zusammengesetzter Vorrichtung ist somit zwischen der Garfläche 3 einerseits und dem Garflächenträger 2 und der Haube 4 andererseits ein Spalt 10 gebildet (siehe Figur 2). Über den Spalt 10 sowie die Durchbrüche 11 des Garflächenträgers 2 kann somit Wasserdampf in den Bereich zwischen Garfläche 3 und Haube 4 gelangen.

In Figur 2 sind die in Figur 1 dargestellten Einzelteile zusammengesetzt. Figur 2 zeigt die Vorrichtung während der Zubereitung eines Spiegeleis 12. Das Spiegelei 12 ist so auf der Garfläche 3 positioniert, dass dessen Eigelb 13 in der Mulde 9 zu liegen gekommen ist. Die Mulde 9 ist dabei fluchtend zu dem rohrförmigen Trenneinsatz 5 ausgerichtet, wobei die Mulde 9 und ein der Garfläche 3 zugeordneter Endabschnitt des Trenneinsatzes 5 einen gleichen Durchmesser aufweisen. Das in Richtung des Trenneinsatzes 5 vorgewölbte Eigelb 13 ragt dabei zumindest abschnittsweise in den zur Garfläche 3 hin offenen Endabschnitt des Trenneinsatzes 5 hinein. Der Trenneinsatz 5 ist somit mit geringstmöglichem Abstand zu der Garfläche 3 angeordnet, wodurch der von dem Trenneinsatz 5 abgetrennte Teilbereich 8' des Zubereitungsbereichs 8 wärmetechnisch von dem restlichen Zubereitungsbereich 8 entkoppelt ist.

Da Figur 2 die Vorrichtung während der Zubereitung eines Spiegeleis 12 darstellt, ist der Wasserbehälter 6 mit Wasser 14 gefüllt, welches erhitzt und als Wasserdampf über die Durchbrüche 11 des Garflächenträgers 2 und den Spalt 10 rund um die Garfläche 3 herum in den Zubereitungsbereich 8 oberhalb der Garfläche 3 gelangt. Der Trenneinsatz 5 verhindert dabei, dass der Wasserdampf auch in den abgetrennten Teilbereich 8' mit dem Eigelb 13 gelangt, so dass sich kein weißlicher Schleier auf dem Eigelb 13 bildet. Indem der Trenneinsatz 5 nach oben hin offen ist, ist zudem sichergestellt, dass trotz Trenneinsatz 5 in den Teilbereich 8' gelangender Wasserdampf effektiv aus diesem abzieht.

## Patentansprüche

1. Vorrichtung zum Zubereiten von Spiegeleiern (12), aufweisend eine Wärmeerzeugungseinrichtung (1) und wenigstens einen Zubereitungsbereich (8), der zumindest abschnittsweise von der Wärmeerzeugungseinrichtung (1) und einer Haube (4) begrenzt ist, wobei der Zubereitungsbereich (8) wenigstens eine Garfläche (3) aufweist, auf der wenigstens ein zuzubereitendes Spiegelei (12) anordbar ist, und wobei die Haube (4) wenigstens einen Trenneinsatz (5) aufweist, durch den ein Teilbereich (8') des Zubereitungsbereichs (8) von dem restlichen Zubereitungsbereich (8) abgetrennt ist,
**dadurch gekennzeichnet,**
**dass** der Trenneinsatz (5) einen bei bestimmungsgemäßer Verwendung nach oben hin offenen Abzug ausbildet.

2. Vorrichtung nach Anspruch 1, **dadurch gekennzeichnet, dass** die Garfläche (3) wenigstens eine Mulde (9) aufweist.

3. Vorrichtung nach Anspruch 2, **dadurch gekennzeichnet, dass** die Mulde (9) an die Größe eines aufgeschlagenen Eigelbs (13) angepasst ist.

4. Vorrichtung nach Anspruch 1 oder 2, **dadurch gekennzeichnet, dass** die Mulde (9) an die Größe eines Spiegeleis (12) angepasst ist.

5. Vorrichtung nach einem der Ansprüche 2 bis 4, **dadurch gekennzeichnet, dass** die Mulde (9) in der Garfläche (3) fluchtend zu dem Teilbereich, der mit dem Trenneinsatz (5) vom restlichen Zubereitungsbereich (8) abgetrennt ist, angeordnet ist.

6. Vorrichtung nach einem der Ansprüche 1 bis 5, **dadurch gekennzeichnet, dass** der Trenneinsatz (5) durch ein rohrförmiges Teil gebildet ist, das eine Längsachse aufweist, die zumindest mit einem der Garfläche (3) zugewandten Endabschnitt senkrecht zu der Garfläche (3) ausgerichtet ist.

7. Vorrichtung nach einem der Ansprüche 1 bis 6 **dadurch gekennzeichnet, dass** die Garfläche (3) eine Antihaftbeschichtung aufweist.

8. Vorrichtung nach einem der Ansprüche 1 bis 7, **dadurch gekennzeichnet, dass** die Wärmeerzeugungseinrichtung (1) dazu geeignet und ausgelegt ist, Wasserdampf zu erzeugen.

9. Vorrichtung nach Anspruch 8, **dadurch gekennzeichnet, dass** der von der Wärmeerzeugungseinrichtung (1) erzeugte Wasserdampf die Garfläche (3) von unten beaufschlagt und erhitzt.

10. Vorrichtung nach einem der Ansprüche 8 oder 9, **dadurch gekennzeichnet, dass** die Wärmeerzeugungseinrichtung (1) derart mit dem Zubereitungsbereich (8) verbunden ist, dass in der Wärmeerzeugungseinrichtung (1) erzeugter Wasserdampf in den Zubereitungsbereich (8) gelangt, nicht jedoch in den durch den Trenneinsatz (5) abgetrennten Teilbereich (8') des Zubereitungsbereichs (8).

11. Vorrichtung nach Anspruch 10, **dadurch gekennzeichnet, dass** in dem Garflächenträger (2) Durchbrüche (11) und rings um die Garfläche (3) ein Spalt (10) vorhanden sind, so dass Wasserdampf von der Wärmeerzeugungseinrichtung (1) in den Zubereitungsbereich (8) gelangt.

## Claims

1. A device for preparing fried eggs (12), having a heat generating device (1) and at least one preparation region (8) which is defined at least in some portions by the heat generating device (1) and a cover (4), wherein the preparation region (8) has at least one cooking surface (3) on which at least one fried egg (12) to be prepared can be arranged, and wherein the cover (4) has at least one separating insert (5), a partial region (8') of the preparation region (8) being separated thereby from the remaining preparation region (8),
**characterized in that**
the separating insert (5) forms an upwardly open vent when used as intended.

2. The device according to Claim 1, **characterized in that** the cooking surface (3) has at least one depression (9).

3. The device according to Claim 2, **characterized in that** the depression (9) is adapted to the size of an egg yolk (13) from an egg which has been cracked open.

4. The device according to Claim 1 or 2, **characterized in that** the depression (9) is adapted to the size of a fried egg (12).

5. The device according to one of Claims 2 to 4, **characterized in that** the depression (9) in the cooking surface (3) is arranged aligned with the partial region which is separated by the separating insert (5) from the remaining preparation region (8).

6. The device according to one of Claims 1 to 5, **characterized in that** the separating insert (5) is formed by a tubular part which has a longitudinal axis which is oriented perpendicularly to the cooking surface (3) at least with an end portion facing the cooking surface (3).

7. The device according to one of Claims 1 to 6, **characterized in that** the cooking surface (3) has a non-stick coating.

8. The device according to one of Claims 1 to 7, **characterized in that** the heat generating device (1) is suitable and designed for generating steam.

9. The device according to Claim 8, **characterized in that** the steam generated by the heat generating device (1) acts on the cooking surface (3) from below and heats the cooking surface up.

10. The device according to one of Claims 8 or 9, **characterized in that** the heat generating device (1) is connected to the preparation region (8) such that steam generated in the heat generating device (1) passes into the preparation region (8) but not into the partial region (8') of the preparation region (8) separated by the separating insert (5).

11. The device according to Claim 10, **characterized in that** through-holes (11) are present in the cooking surface support (2) and a gap (10) is present all around the cooking surface (3) so that steam passes from the heat generating device (1) into the preparation region (8).

## Revendications

1. Dispositif, destiné à préparer des œufs au plat (12), comportant un système générateur de chaleur (1) et au moins une zone de préparation (8), qui est délimitée au moins par endroits par le système générateur de chaleur (1) et par un capot (4), la zone de préparation (8) comportant au moins une surface de cuisson (3), sur laquelle l'on peut disposer au moins un œuf au plat (12) qui doit être préparé et le capot (4) comportant au moins un insert séparateur (5), par lequel une zone partielle (8') de la zone de préparation (8) est séparée du reste de la zone de préparation (8),
**caractérisé en ce que**
l'insert séparateur (5) constitue une évacuation ouverte vers le haut, dans le cas d'une utilisation conforme.

2. Dispositif selon la revendication 1, **caractérisé en ce que** la surface de cuisson (3) comporte au moins un creux (9).

3. Dispositif selon la revendication 2, **caractérisé en ce que** le creux (9) est adapté à la taille d'un jaune d'œuf (13) cassé.

4. Dispositif selon la revendication 1 ou 2, **caractérisé en ce que** le creux (9) est adapté à la taille d'un œuf au plat (12).

5. Dispositif selon l'une quelconque des revendications 2 à 4, **caractérisé en ce que** le creux (9) est placé dans la surface de cuisson (3) en alignement avec la zone partielle, qui est séparée par l'insert séparateur (5) du reste de la zone de préparation (8).

6. Dispositif selon l'une quelconque des revendications 1 à 5, **caractérisé en ce que** l'insert séparateur (5) est constitué d'une pièce de forme tubulaire, qui comporte un axe longitudinal, qui au moins par une partie d'extrémité faisant face à la surface de cuisson (3) est orienté à la perpendiculaire de la surface de cuisson (3).

7. Dispositif selon l'une quelconque des revendications 1 à 6 **caractérisé en ce que** la surface de cuisson (3) comporte un revêtement antiadhérent.

8. Dispositif selon l'une quelconque des revendications 1 à 7, **caractérisé en ce que** le système générateur de chaleur (1) est adapté et conçu pour générer de la vapeur d'eau.

9. Dispositif selon la revendication 8, **caractérisé en ce que** la vapeur d'eau générée par le système générateur de chaleur (1) sollicite par le dessous et chauffe la surface de cuisson (3).

10. Dispositif selon l'une quelconque des revendications 8 ou 9, **caractérisé en ce que** le système générateur de chaleur (1) est assemblé avec la zone de préparation (8), de telle sorte que de la vapeur d'eau générée dans le système générateur de chaleur (1) arrive dans la zone de préparation (8), mais pas toutefois dans la zone partielle (8') de la zone de préparation (8) séparée par l'insert séparateur (5).

11. Dispositif selon la revendication 10, **caractérisé en ce que** dans le support (2) de surface de cuisson sont présents des ajours (11) et autour de la surface de cuisson (3) est présente une fente (10), de sorte que de la vapeur d'eau arrive de la part du système générateur de chaleur (1) dans la zone de préparation (8) .
